# EUROPÄISCHE PATENTANMELDUNG

(11) **EP 3 875 807 A1**
(43) Veröffentlichungstag der Anmeldung: **08.09.2021**
(21) Anmeldenummer: 20160779.3
(22) Anmeldetag: 03.03.2020
(51) Int. Cl.: F16J 9/02, F16J 9/06, F16J 9/16, F16J 9/28, F16J 15/24, F16J 15/26, F04B 53/00

(54) **KOLBENRINGANORDNUNG, KOLBENVERDICHTER SOWIE VERFARHEN ZUM ABDICHTEN EINES VERDICHTUNGSRAUMS**

(71) Anmelder: Burckhardt Compression AG, 8404 Winterthur (CH)
(72) Erfinder: FLOOD, David, Watford WD25 7HX (GB)
(74) Vertreter: Dr. Graf & Partner AG

(57) **Zusammenfassung**

Die Kolbenringanordnung (1) umfasst einen ersten und einen zweiten endlosen Dichtring (2, 4) sowie einen elastischen Ringträger (3), wobei der erste und der zweite Dichtring (2,4) in einer Umfangsrichtung (U) verlaufen und je eine Aussenumfangsfläche (2a, 4a) aufweisen, wobei der erste Dichtring (2) bezüglich seiner Aussenumfangsfläche (2a) einen ersten Mittelpunkt (M₁) und der zweite Dichtring (4) bezüglich seiner Aussenumfangsfläche (4a) einen zweiten Mittelpunkt (M₂) aufweist, wobei der erste und der zweite Dichtring (2,4) je eine senkrecht zur Umfangsrichtung (U) verlaufende Längsachse (L) aufweist, wobei der Ringträger (3) in Umfangsrichtung (U) verläuft, und wobei der Ringträger (3) sowie der erste und der zweite Dichtring (1,2) derart gegenseitig angepasst ausgestaltet sind, dass der erste und der zweite Dichtring (1,2) in Richtung der Längsachse (L) nacheinander im Ringträger (3) angeordnet sind, und dass deren erster und zweiter Mittelpunkt (M₁, M₂) radial zur Längsachse (L) gegenseitig beabstandet angeordnet sind.

## Beschreibung

Die Erfindung betrifft eine Kolbenringanordnung. Die Erfindung betrifft zudem einen Kolbenverdichter umfassend eine Kolbenringanordnung. Die Erfindung betrifft zudem ein Verfahren zum Abdichten eines Verdichtungsraums.

### Stand der Technik

Kolbenverdichter umfassend einen Zylinder sowie einen darin linear beweglichen Kolben sind bekannt. In einer möglichen Ausgestaltung ist am Kolben ein Kolbenring angeordnet, wobei der Kolbenring entlang der Zylinderwand gleitet, sodass der Kolbenring den durch den Zylinder und den beweglichen Kolben begrenzten Verdichtungsraum abdichtet. Die Druckschrift WO 98/55783A1 offenbart in Figur 6 einen trockenlaufenden Kolbenverdichter mit einem am Kolben angeordneten, an der Zylinderwand reibenden Kolbenring. Dieser bekannte Kolbenring ist für den Einsatz bei hohen Druckdifferenzen nur bedingt geeignet, da dieser unter Belastung ein ausgeprägtes Kaltfliessen aufweisen, was einen schnellen Verschleiss des Kolbenrings zur Folge hat.

### Darstellung der Erfindung

Aufgabe der Erfindung ist es einen Kolbenringanordnung sowie einen Kolbenverdichter auszugestalten, der vorteilhaftere Betriebseigenschaften aufweist.

Diese Aufgabe wird gelöst mit einer Kolbenringanordnung aufweisend die Merkmale von Anspruch 1. Die abhängigen Ansprüche 2 bis 10 betreffen weitere, vorteilhafte Ausgestaltungen der Erfindung. Die Aufgabe wird weiter gelöst mit einem Kolbenverdichter aufweisend die Merkmale von Anspruch 12. Die abhängigen Ansprüche 13 und 14 betreffen weitere, vorteilhafte Ausgestaltungen. Die Aufgabe wird weiter gelöst mit einem Verfahren zum Abdichten eines Verdichtungsraums aufweisend die Merkmale von Anspruch 15. Der abhängige Anspruch 16 betrifft ein weiteres, vorteilhaftes Verfahren. Die Aufgabe wird weiter gelöst mit einer Verwendung der Kolbenringanordnung gemäss Anspruch 17 als Druckbrecher zum Abdichten dynamischer Druckanteile.

Die Aufgabe wird insbesondere gelöst mit einer Kolbenringanordnung umfassend einen ersten und einen zweiten endlosen Dichtring sowie einen elastischen Ringträger, wobei der erste und der zweite Dichtring in einer Umfangsrichtung verlaufen und je eine Aussenumfangsfläche aufweisen, wobei der erste Dichtring bezüglich seiner Aussenumfangsfläche einen ersten Mittelpunkt und der zweite Dichtring bezüglich seiner Aussenumfangsfläche einen zweiten Mittelpunkt aufweist, wobei der erste und der zweite Dichtring je eine senkrecht zur Umfangsrichtung verlaufende Längsachse aufweisen, wobei der Ringträger in Umfangsrichtung verläuft, und wobei der Ringträger sowie der erste und der zweite Dichtring derart gegenseitig angepasst ausgestaltet sind, dass der erste und der zweite Dichtring in Richtung der Längsachse nacheinander im Ringträger angeordnet sind, und dass deren erster und zweiter Mittelpunkt radial zur Längsachse gegenseitig beabstandet angeordnet sind.

Die Aufgabe wird weiter gelöst mit einem Kolbenverdichter umfassend einen Zylinder, umfassend einen im Zylinder angeordneten Kolben, sowie umfassend zumindest eine am Kolben angeordnete erfindungsgemässe Kolbenringanordnung.

Der Kolbenverdichter umfasst einen Zylinder und einen Kolben, welche einen Verdichtungsraum begrenzen, wobei der Kolben vorteilhafterweise, ausgehend vom Verdichtungsraum, in Richtung der Längsachse einen erste Teilabschnitt und nachfolgend einen zweiten Teilabschnitt aufweist, wobei entlang des ersten Teilabschnitts zumindest eine Kolbenringanordnung angeordnet ist, und wobei entlang des zweiten Teilabschnitts vorzugsweise zumindest ein einen statischen Druck abdichtender Kolbenring angeordnet ist, wobei die Kolbenringanordnung vorzugsweise dynamische Druckanteile abdichtet.

Die Aufgabe wird zudem gelöst mit einem Verfahren zum Abdichten eines Verdichtungsraums, der von einem Zylinder und einem darin angeordneten, in Richtung einer Längsachse beweglichen Kolben begrenzt wird, wobei eine Kolbenringanordnung umfassend ein erster und ein zweiter endloser Dichtring am Kolben angeordnet ist, wobei der erste und der zweite endlose Dichtring in einem Ruhezustand Quer, insbesondere senkrecht zur Längsachse in entgegengesetzter Richtung an eine Innenwand des Zylinders gedrückt werden, und wobei der erste und der zweite endlose Dichtring während der Kompressionsphase des Kolbens durch den im Verdichtungsraum des Zylinders ansteigenden Innendruck zusätzlich in der entgegengesetzten Richtung an die Innenwand des Zylinders gedrückt werden.

In einer vorteilhaften Ausgestaltung ist die erfindungsgemässe Kolbenringanordnung in Längsrichtung nicht vollständig dicht, sondern nur teilweise. Eine solche Kolbenringanordnung ist insbesondere als Druckbrecher geeignet, zum Abdichten dynamischer Druckanteile.

Die erfindungsgemässe Kolbenringanordnung weist den Vorteil auf, dass diese äusserst stabil ausgestaltet sein kann und für hohe angreifende Druckdifferenzen geeignet ist, zum Beispiel für Drücke bis 500 Bar, und insbesondere zum Verdichten von Wasserstoff geeignet ist. Die erfindungsgemässe Kolbenringanordnung ist unter anderem deshalb äusserst stabil, weil die Dichtringe endlos und einstückig ausgestaltet sind, wobei die Dichtringe vorzugsweise aus einem verschleissbaren Material bestehen, insbesondere aus einem Metall wie Bronze, Grauguss oder Sintereisen, oder aus einem Kunststoff wie PTFE, gefülltes PTFE oder Hochtemperaturpolymere wie PEEK, PI oder Epoxid. Die erfindungsgemässe Kolbenringanordnung umfasst zwei Dichtringe, die gegengleich an die Innenwand eines Zylinders gedrückt werden. Dies hat zur Folge, dass jeder Dichtring auf der einen Seite an die Zylinderinnenwand gedrückt wird, und bezüglich der Längsachse auf der gegenüberliegenden Seite ein kleiner Spalt zwischen Dichtring und Zylinderinnenwand entsteht, insbesondere wenn der Dichtring bereits einen gewissen Verschleiss aufweist. Die erfindungsgemässe Kolbenringanordnung umfasst in Längsrichtung nacheinander folgend angeordnet zwei Dichtringe, einen ersten Dichtring und einen zweiten Dichtring, wobei der erste Dichtring an der einen Seite an die Zylinderinnenwand gedrückt wird, und der zweite Dichtring bezüglich der Längsachse auf der gegenüberliegenden Seite an die Zylinderinnenwand gedrückt wird. Dies ergibt in Längsrichtung eine sehr gute Dichtwirkung, wobei die erfindungsgemässe Kolbenringanordnung, auf Grund der allenfalls entstehenden kleinen Spalte zwischen Dichtring und Zylinderinnenwand in Richtung der Längsachse nicht unbedingt vollständig dicht ist. Die erfindungsgemässe Kolbenringanordnung ist deshalb insbesondere als sogenannter Druckbrecheranordnung geeignet, deren Aufgabe es ist während dem Verdichten auftretende Druckspitzen zu brechen bzw. abzudichten, wogegen eine solche Druckbrecheranordnung eine gewisse Undichtigkeit in Richtung der Längsachse aufweisen darf. Die erfindungsgemässe Kolbenringanordnung weist somit insbesondere den Vorteil auf, dass dynamisch wirkende Druckkräfte erheblich reduziert werden können, sodass an den entlang des zweiten Teilabschnitts des Kolbens angeordneten, einen statischen Druck abdichtenden Kolbenringen, vorzugsweise im Wesentlichen zur noch ein statischer Druck anliegt, jedoch nicht mehr der hohe Druckanteile aufweisende dynamische Druck, was zur Folge hat, dass auf die den statischen Druck abdichtenden Kolbenringen wesentlich kleinere Druckkräfte wirken, was deren Lebensdauer bzw. deren Standzeit erheblich erhöht.

Die Erfindung wird nachfolgend an Hand mehrerer Ausführungsbeispiele im Detail beschrieben.

### Kurze Beschreibung der Zeichnungen

Die zur Erläuterung der Ausführungsbeispiele verwendeten Zeichnungen zeigen:
Fig. 1 eine perspektivische Explosionszeichnung einer Kolbenringanordnung;
Fig. 2 eine Draufsicht auf den in Figur 1 dargestellten Ringträger;
Fig. 3 eine Draufsicht auf den in Figur 1 dargestellten Dichtring;
Fig. 4 eine Unteransicht des in Figur 2 dargestellten Ringträgers;
Fig. 5 einen Querschnitt durch den Ringträger entlang der Schnittlinie A-A;
Fig. 6 eine Detailansicht des Zentrums der Figur 4;
Fig. 7 einen Längsschnitt durch eine Kolbenringanordnung im entspannten Zustand;
Fig. 8 einen Längsschnitt durch einen Zylinder, einen Kolben, und eine im Kolben angeordnete Kolbenringanordnung;
Fig. 9 eine Draufsicht auf die in Figur 7 dargestellte Kolbenringanordnung;
Fig. 10 einen Schnitt durch die Kolbenringanordnung gemäss Figur 7 entlang der Schnittlinie B-B;
Fig. 11 einen Schnitt durch die Kolbenringanordnung gemäss Figur 8 entlang der Schnittlinie D-D;
Fig. 12 einen Schnitt durch die Kolbenringanordnung gemäss Figur 8 entlang der Schnittlinie C-C;
Fig. 13 ein Detailaspekt des Längsschnittes gemäss Figur 8;
Fig. 14 eine Seitenansicht eines Kolbens mit darin angeordneten Kolbenringanordnungen;
Fig. 15 einen Längsschnitt durch ein weiteres Ausführungsbeispiel einer Kolbenringanordnung im entspannten Zustand;
Fig. 16 eine Draufsicht auf ein weiteres Ausführungsbeispiel einer Kolbenringanordnung im entspannten Zustand;
Fig. 17 eine Detailansicht eines Schnittes durch ein weiteres Ausführungsbeispiel einer Kolbenringanordnung;
Fig. 18 eine Detailansicht eines Schnittes durch ein weiteres Ausführungsbeispiel einer Kolbenringanordnung;
Fig. 19 eine Unteransicht einer weiteren Ausführungsform des in Figur 2 dargestellten Ringträgers;
Fig. 20 eine Draufsicht auf ein weiteres Ausführungsbeispiels eines Dichtrings;
Fig. 21 einen Längsschnitt durch eine weitere Kolbenringanordnung im entspannten Zustand.

Grundsätzlich sind in den Zeichnungen gleiche Teile mit gleichen Bezugszeichen versehen.

### Wege zur Ausführung der Erfindung

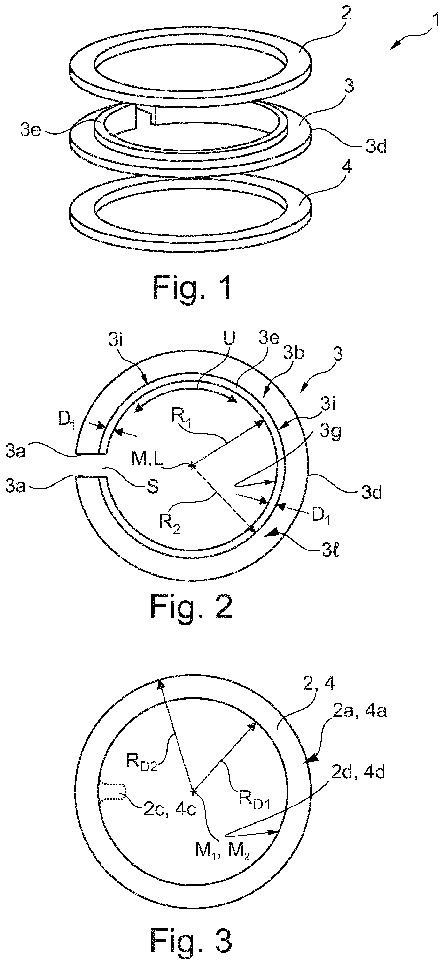

Fig. 1 zeigt ein erstes Ausführungsbeispiel einer Kolbenringanordnung 1 bestehend aus einem ersten endlosen Dichtring 2, einem zweiten endlosen Dichtring 4, sowie einem einstückigen bzw. einteiligen Ringträger 3.

Figur 2 zeigt den in Figur 1 dargestellten Ringträger 3 in einer Draufsicht. Der Ringträger 3 erstreckt sich kreisförmig um einen Ringträgermittelpunkt M in einer Umfangsrichtung U und weist eine senkrecht zur Umfangsrichtung U und durch den Ringträgermittelpunkt M verlaufende Längsachse L auf. Der Ringträger 3 weist in Umfangsrichtung U beidseitig je einen Endabschnitt 3a auf, welche in Umfangsrichtung U gegenseitige beabstandet sind und eine Stossstelle bzw. einen Spalt S ausbilden. Der Spalt S weist in Umfangsrichtung U vorzugsweise eine Breite im Bereich zwischen 1% bis 5% des Aussenumfangs des Dichtrings 2 auf. Der Dichtring 2 weist vorzugsweise einen Durchmesser im Bereich zwischen 30mm und 250 mm auf, und weist somit vorzugsweise einen Aussenumfang im Bereich zwischen 94 mm und 785 mm auf. Der Ringträger 3 umfasst einen ersten Ringträgersteg 3e, der in Richtung der Längsachse L verläuft, der in Umfangsrichtung U konzentrisch zum Ringträgermittelpunkt M verläuft, und der eine konstante Wandstärke D 1 aufweist. Die konkave Innenseite 3g des ersten Ringträgerstegs 3e weist einen Innenradius R₁ auf, und die konvexe Aussenfläche 3i des ersten Ringträgerstegs 3e weist einen ersten Aussenradius R₂ auf. Der Ringträger 3 umfasst zudem einen Zwischensteg 3d, der radial zur Längsachse L über den ersten Ringträgersteg 3e vorsteht. Der erste Ringträgersteg 3e sowie der Zwischensteg 3d bilden eine erste Ausnehmung 3b zur Aufnahme des ersten endlosen Dichtrings 2. Die Ausnehmung 3b wird begrenzt durch eine senkrecht zur Längsachse L verlaufende Auflagefläche 31 sowie die konvexe Aussenfläche 3i.

Figur 3 zeigt eine Draufsicht auf den ersten Dichtring 2 aufweisend einen ersten Mittelpunkt M₁, und aufweisend einen Innenradius R_{D1} sowie einen Aussenradius R_{D2}. Optional kann der Dichtring 2 zudem ein Fixierteil 2c bzw. eine Verdrehsicherung 2c umfassen, beispielsweise, wie in Figur 3 strichliert dargestellt, eine gegen den ersten Mittelpunkt M₁ hin vorstehende Nase. Figur 3 zeigt zudem eine Draufsicht auf den zweiten Dichtring 4, der im dargestellten Ausführungsbeispiel identisch ausgestaltet ist wie der erste Dichtring 2. Der zweite Dichtring 4 weist einen zweiten Mittelpunkt M₂ auf, und weist wiederum einen Innenradius R_{D1} sowie einen Aussenradius R_{D2} auf, und kann zudem optional ein Fixierteil 4c aufweisen. Zudem weisen beide Dichtringe 2,4 an den Stirnseiten eine Aussenumfangsfläche 2a, 4a, sowie eine Innenumfangsfläche 2d, 2d, auf. Vorzugsweise sind der erste und der zweite Dichtring 2,4, wie in Figur 3 dargestellt, identisch ausgestaltet. Der erste Dichtring 2 und der zweite Dichtring 4 könnten jedoch auch je einen unterschiedlichen Innenradius R_{D1} aufweisen.

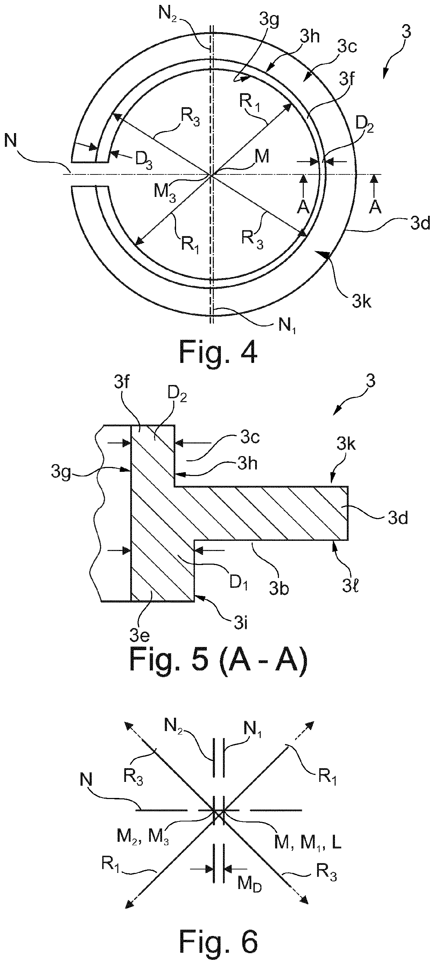

Figur 4 zeigt in einer Draufsicht die Rückseite des in Figur 2 dargestellten Ringträgers 3. Der Ringträger 3 ist derart zur Aufnahme des ersten und des zweiten Dichtrings 1,2 ausgestaltet, dass der erste und der zweite Dichtring 1,2 in Richtung der Längsachse L nacheinander angeordnet sind, und dass deren erster und zweiter Mittelpunkt M₁, M₂ radial bzw. quer zur Längsachse L gegenseitig beabstandet bzw. gegenseitig versetzt angeordnet sind. Der Ringträger 3 umfasst einen zweiten Ringträgersteg 3f, dessen konkave Innenfläche 3g in Umfangsrichtung U konzentrisch zum Ringträgermittelpunkt M verläuft, sodass die gemeinsame Innenfläche 3g des ersten Ringträgerstegs 3e und des zweiten Ringträgerstegs 3f einen identischen, konkaven Verlauf aufweisen bzw. in Richtung der Längsachse L einen identischen Verlauf aufweisen. Der zweite Ringträgersteg 3f verläuft bezüglich der Längsachse L in Umfangsrichtung U, und erstreckt sich zudem in Richtung der Längsachse L. Der Ringträger 3 umfasst wiederum den Zwischensteg 3d, der radial zur Längsachse L über den zweiten Ringträgersteg 3f vorsteht. Der zweite Ringträgersteg 3f sowie der Zwischensteg 3d bilden eine zweite Ausnehmung 3c zur Aufnahme des zweiten endlosen Dichtrings 4. Die zweite Ausnehmung 3c wird begrenzt durch eine senkrecht zur Längsachse L verlaufende Auflagefläche 3k des Zwischenstegs 3d sowie durch eine konvexe Aussenfläche 3h des zweiten Ringträgerstegs 3f. Die konkave Innenfläche 3g des zweiten Ringträgerstegs 3f verläuft, wie auch aus Figur 2 ersichtlich, konzentrisch zum Ringträgermittelpunkt M und weist denselben Innenradius R₁ auf wie der erste Ringträgersteg 3e. Der in Figur 2 dargestellte erste Ringträgersteg 3e weist entlang der Umfangsrichtung U eine konstante Wandstärke D₁ auf. Der in Figur 4 dargestellte zweite Ringträgersteg 3f weist hingegen eine sich in Umfangsrichtung U verändernde Wandstärke auf. Der zweite Ringträgersteg 3f ist derart ausgestaltet, dass dessen konvexe Aussenfläche 3h konzentrisch und kreisförmig bezüglich deinem dritten Mittelpunkt M₃ verläuft. Der dritte Mittelpunkt M₃ ist bezüglich dem Ringträgermittelpunkt M, wie in Figur 4 dargestellt und noch detaillierter in Figur 6 dargestellt, leicht nach links verschoben. Die Figur 4 zeigt eine Symmetrieebene N, bezüglich welcher der Ringträger 3 symmetrisch ausgestaltet ist. Weil der dritte Mittelpunkt M₃ bezüglich dem Ringträgermittelpunkt M leicht nach links verschoben ist weist der zweite Ringträgersteg 3f im Bereich des Schnitts der Symmetrieebene N mit dem Ringträge 3 eine schmalere Wandstärke D₂ aufweist als die Wandstärke D₁ des ersten Ringträgerstegs 3e, wobei die Wandstärke des zweiten Ringträgerstegs 3f, ausgehend von der schmaleren Wandstärke D₂ bei der Symmetrieebene N, in Umfangsrichtung U zum Spalt S hin zunimmt zur breiteren Wandstärke D₃. Figur 4 zeigt eine erste Hilfslinie N₁ sowie eine zweite Hilfslinie N₂, wobei die erste Hilfslinie N₁ durch den Ringträgermittelpunkt M verläuft, und wobei die zweite Hilfslinie N₂ durch den dritten Mittelpunkt M₃ verläuft, sodass deren Versatz, wie insbesondere aus Figur 6 ersichtlich, die Mittelpunktdistanz M_{D} zwischen dem Ringträgermittelpunkt M und dem dritten Mittelpunkt M₃ darstellt. Die Mittelpunktdistanz M_{D} zwischen dem ersten und der zweitem Mittelpunkt M₁, M₂ des ersten und zweiten Dichtrings 2,4 liegt vorzugsweise in einem Bereich zwischen 0,1 mm bis 10 mm.

Figur 6 zeigt eine Detailansicht des Zentrums der Figur 4, in welcher der vorhin beschriebene Aspekt vergrössert dargestellt ist, nämlich dass der Ringträgermittelpunkt M und der dritte Mittelpunkt M₃ gegenseitig um die Mittelpunktdistanz M_{D} beabstandet sind. Wenn der erste Dichtring 2 und der zweite Dichtring 4 in dem in Figur 4 dargestellten Ringträger 3 angeordnet werden, so ist der erste Mittelpunkt M₁ des ersten Dichtrings 2 identisch mit dem Ringträgermittelpunkt M, und ist der zweite Mittelpunkt M₂ des zweiten Dichtrings 4 identisch mit dem dritten Mittelpunkt M₃. Der erste Dichtring 2 und der zweite Dichtring 4, welche gemeinsam im Ringträger 3 angeordnet werden, sind somit gegenseitig, radial zur Längsachse L, mit einem durch den Ringträger 3 vorgegebenem, gegenseitigem Abstand im Ringträger 3 gehalten. Die Figuren 1, 2 und 4 zeigen den Ringträger 3 in einem entspannten Zustand. Wie nachfolgend beschrieben ist der Ringträger 3 elastisch verformbar, was zur Folge hat, dass sich die Mittelpunktdistanz M_{D} zwischen dem Ringträgermittelpunkt M und dem dritten Mittelpunkt M₃ abhängig vom Grad der elastischen Verformung des Ringträgers 3 verändern kann.

Figur 5 zeigt einen Schnitt durch den Ringträger 3 entlang der Schnittlinie A-A gemäss Figur 4. Daraus ist insbesondere ersichtlich, dass der erste Ringträgersteg 3e eine Wandstärke D₁ aufweist, und dass der zweite Ringträgersteg 3f an der Schnittstelle A-A eine schmalere Wandstärke D₂ aufweist, oder anders ausgedrückt, ist die konzentrisch und kreisförmig bezüglich dem dritten Mittelpunkt M₃ verlaufende, konvexe Aussenfläche 3h bezüglich der konzentrisch und kreisförmig bezüglich dem Ringträgermittelpunkt M verlaufende, konvexen Aussenfläche 3i um die Mittelpunktdistanz M_{D} verschoben, in der gewählten Darstellung nach links verschoben ist, wobei der Verlauf der beiden konvexen Aussenflächen 3h, 3i den Ort des Mittelpunkts des erste und zweiten Dichtrings 2,4 bestimmen, sodass der erste Mittelpunkt M₁ des ersten Dichtrings 2 und der zweite Mittelpunkt M₂ des zweiten Dichtrings 4 ebenfalls einen gegenseitigen Abstand entsprechend der Mittelpunktdistanz M_{D} aufweisen.

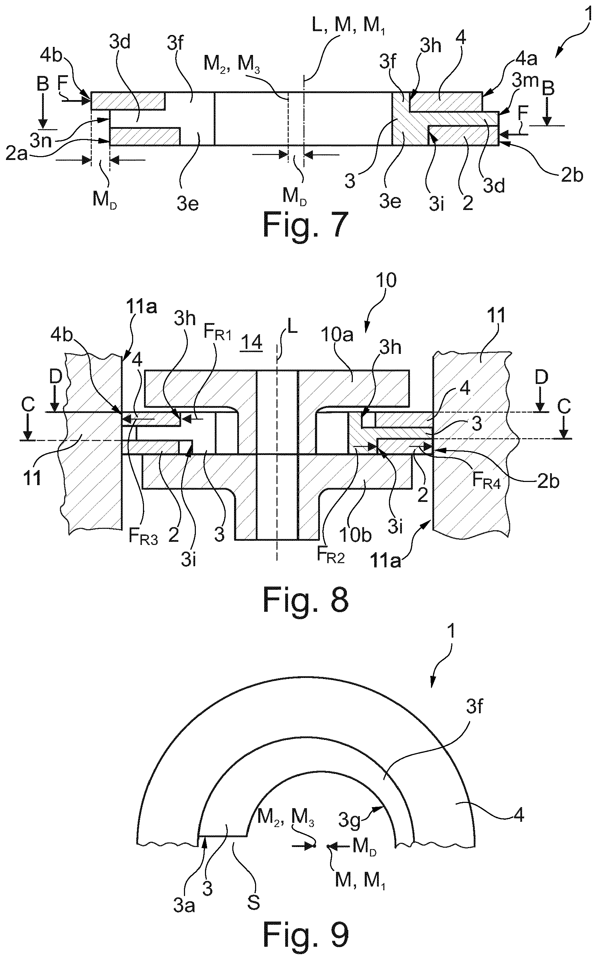

Figur 7 zeigt einen Längsschnitt durch ein Ausführungsbeispiel einer Kolbenringanordnung 1 entlang der in Figur 4 dargestellten Symmetrieebene N, wobei die Kolbenringanordnung 1 aus dem Ringträger 3 sowie dem ersten und zweiten Dichtring 1, 2 besteht. Zur besseren Darstellung des Ringträgers 3 und der Dichtringe 1, 2 sind diese in der in den Figuren 7 bis 12 dargestellten Kolbenringanordnung 1, im Vergleich zur Ausführungsform gemäss der Figuren 1 bis 6, vergrössert dargestellt, wogegen der Innenradius R₁ reduziert dargestellt ist. Der erste und der zweite Dichtring 2, 4 bzw. deren erster und zweiter Mittelpunk M₁, M₂ sind gegenseitig um die Mittelpunktdistanz M_{D} versetzt im Ringträger 3 angeordnet. Sowohl der in Figur 7 dargestellte Ringträger 3, als auch die in den Figuren 1, 2, 4, 5, 9 und 10 dargestellten Ringträger 3, sind in einem entspannten Zustand. Die Figure 7 zeigt zudem noch jeweils bezüglich der Längsachse L gegenüber liegend angeordnete Aussenflächen, nämlich zwei Aussenflächen 2a, 2b des ersten Dichtrings 2, zwei Aussenflächen 4a, 4b des zweiten Dichtrings 4, sowie zwei Aussenflächen 3m, 3n des Ringträgers 3 beziehungsweise des Zwischenstegs 3d.

Figur 9 zeigt eine Draufsicht auf die in Figur 7 dargestellte Kolbenringanordnung 1, wobei der rechts, radial zur Längsachse L über den zweiten Dichtring 4 vorstehende Zwischensteg 3d des Ringträgers 3 nicht dargestellt ist. Zudem zeigt Figur 9 den Ringträgermittelpunkt M, den ersten Mittelpunkt M₁, den zweiten Mittelpunkt M₂, sowie den dritten Mittelpunkt M₃ sowie die Mittelpunktdistanz M_{D}.

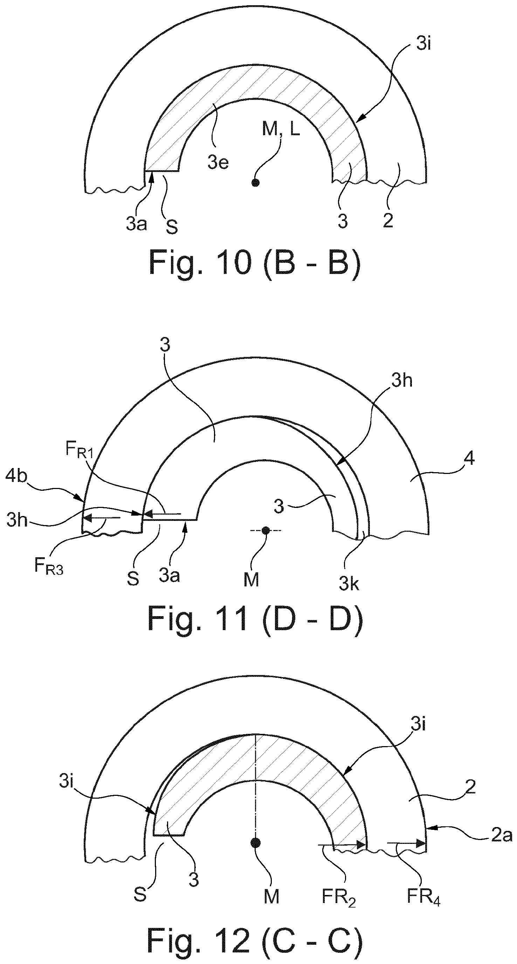

Figur 10 zeigt einen Schnitt durch die in Figur 7 dargestellte Kolbenringanordnung 1 entlang der Schnittlinie B-B. Der erste Ringträgersteg 3e sowie der erste Dichtring 2 verlaufen konzentrisch zum Ringträgermittelpunkt M bzw. zur Längsachse L.

Wie in Figur 7 dargestellt weist der Zwischensteg 3d einen in Umfangsrichtung U verlaufende, bezüglich der Längsachse L radial nach aussen gerichtete Aussenfläche 3m, 3n auf, wobei die erste Ausnehmung 3b radial zur Längsachse L dieselbe Breite aufweist wie der darin anzuordnende erste Dichtring 2, sodass sowohl die Aussenfläche 3m als auch die Aussenfläche 2a des ersten Dichtrings 2, in der dargestellten Ansicht rechts, gemeinsam an einer Innenwand eines Zylinders 11 anliegen können und beide Aussenflächen 3m, 2a in dem an der Zylinderinnenwand 11a anliegenden Bereich während des Betriebs des Kolbens 10 einem Verschleiss unterliegen.

Figur 8 zeigt einen Längsschnitt durch einen Kolbenverdichter umfassend einen Zylinder 11 mit einer Zylinderinnenwand 11a, sowie umfassend einen Kolben 10, der in Richtung der Längsachse L beweglich innerhalb des Zylinders 11 angeordnet ist. Der Kolben 10 ist als ein sogenannter gebauter Kolben ausgestaltet, und umfasst ein erstes Kolbenteil 10a sowie ein zweites Kolbenteil 10b, wobei das erste Kolbenteil 10a und das zweite Kolbenteil 10b einen Zwischenraum ausbilden, in welchem die Kolbenringanordnung 1 angeordnet ist. Der Kolben 10 kann eine Mehrzahl von Kolbenteilen 10a, 10b und insbesondere auch eine Mehrzahl von in deren Zwischenräumen in Richtung der Längsachse L nacheinander angeordneten Kolbenringanordnungen 1 umfassen. Um die in Figur 7 dargestellte Kolbenringanordnung 1 in den Innenraum des Zylinders 11 einzuführen muss auf die Kolbenringanordnung 1, wie in Figur 7 dargestellt, beidseitig eine Kraft F auf den ersten und zweiten Dichtring 1,2 und/oder auf den Ringträger 3 ausgeübt werden, um dadurch den Ringträger 3 elastisch zu verformen, und um dadurch die gegenseitige Distanz M_{D} der Mittelpunkte der Dichtringe 2,4, d. h. die Distanz zwischen ersten Mittelpunkt M₁ des ersten Dichtrings 2 und dem zweiten Mittelpunkt M₂ des zweiten Dichtrings 4 in zur Längsachse L radialer Richtung zu reduzieren, sodass diese innerhalb des Zylinders 11 Platz finden. Die elastische Verformung des Ringträgers 3 hat zur Folge, dass dieser eine Reaktionskraft auf die Dichtringe 2, 4 ausübt. Im dargestellten Ausführungsbeispiel gemäss Figur 8 übt der Ringträger 3 einerseits eine erste, radial wirkende Kraft F_{R1} auf den zweiten Dichtring 4 aus, und übt der Ringträger 3 gleichzeitig eine zu dieser entgegengesetzt wirkende Kraft, nämlich eine zweite, radial wirkende Kraft F_{R2} auf den ersten Dichtring 2 aus. Da der zweite Dichtring 4 links über die konvexe Aussenfläche 3h am Ringträger 3 anliegt übt der zweite Dichtring 4 in der dargestellten Ansicht nach links eine radial auf die Zylinderinnenwand 11a einwirkende Kraft F_{R3} aus. Auf Grund der elastischen Verformung des Ringträgers 3 ist auf der rechten Seite zwischen der konvexen Aussenfläche 3h und dem zweiten Dichtring 4 ein Spalt entstanden. Da der erste Dichtring 2 rechts über die konvexe Aussenfläche 3i am Ringträger 3 anliegt, übt der erste Dichtring 2 in der dargestellten Ansicht nach rechts eine radial auf die Zylinderinnenwand 11a einwirkende Kraft F_{R4} aus. Auf Grund der elastischen Verformung des Ringträgers 3 ist auf der linken Seite zwischen der konvexen Aussenfläche 3i und dem ersten Dichtring 2 ein Spalt entstanden. Die erfindungsgemässe Kolbenringanordnung 1 weist somit die Eigenschaft auf, dass der erste Dichtring 2 mit dessen Aussenfläche 2a an die Zylinderinnenwand 11a angedrückt wird, und dass der zweite Dichtring 4 auf der entgegengesetzten Seite mit dessen Aussenfläche 4b an die Zylinderinnenwand 11a gedrückt wird. Figur 11 zeigt eine Draufsicht auf die in Figur 8 dargestellte Kolbenringanordnung 1 aus Blickrichtung D-D, wobei das ersten Kolbenteil 10a, das zweite Kolbenteil 10b und der Zylinder 11 nicht dargestellt sind. Die Verformung des Ringträgers 3 hat zur Folge, dass sich rechts zwischen dem zweiten Dichtring 4 und der konvexen Aussenfläche 3h ein Spalt ausbildet, sodass die senkrecht zur Längsachse L verlaufende Auflagefläche 3k sichtbar wird. Figur 12 zeigt einen Schnitt durch die in Figur 8 dargestellte Kolbenringanordnung 1 entlang der Schnittlinie C-C, wobei das ersten Kolbenteil 10a, das zweite Kolbenteil 10b und der Zylinder 11 nicht dargestellt sind. Die Verformung des Ringträgers 3 hat zur Folge, dass sich links zwischen dem ersten Dichtring 2 und der konvexen Aussenfläche 3i ein Spalt ausbildet. Die Verformung des Ringträgers 3 ist in den Figuren 11 und 12 nicht massstäblich sondern nur andeutungsweise dargestellt.

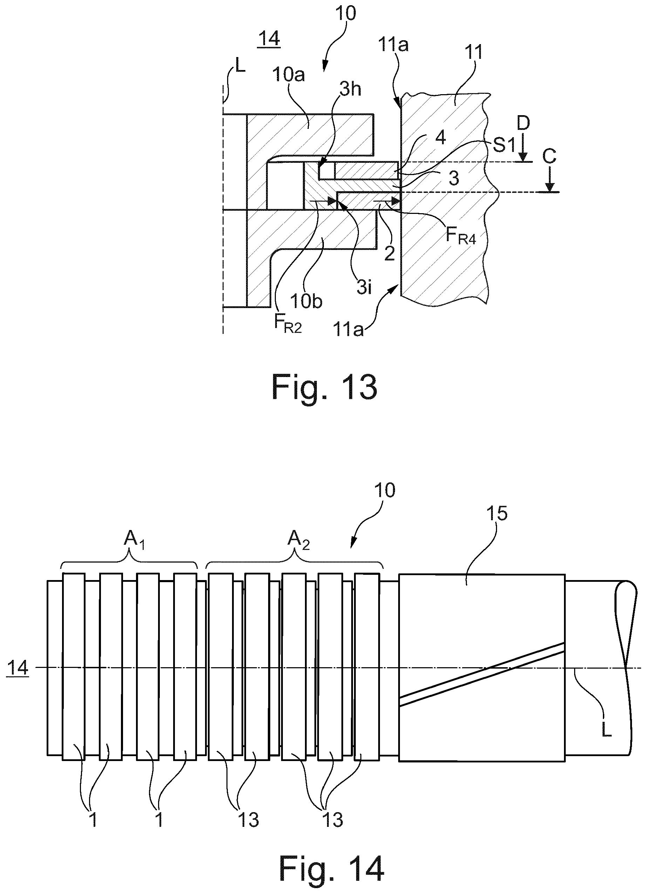

Figur 13 zeigt einen leicht vergrösserten Ausschnitt des in Figur 8 dargestellten Längsschnitts. Der erste und der zweite Dichtring 2,4 weisen im Neuzustand entweder denselben Aussendurchmesser auf wie der Innendurchmesser des Zylinders 11, und vorzugsweise einen Aussendurchmesser auf, der kleiner ist als der Innendurchmesser des Zylinders 11, wobei der Aussendurchmesser vorzugsweise zumindest 0,1% kleiner ist als der Innendurchmesser des Zylinders 11, und besonders bevorzugt zumindest 3% kleiner ist. Der Zylinder 11 weist vorzugsweise einen Innendurchmesser im Bereich zwischen 30 mm und 250 mm auf. Wie in Figur 8 beschrieben drückt der Ringträge 3 den zweite Dichtring 4 in der dargestellten Ansicht an die linke Zylinderinnenwand 11a, sodass, wie in Figur 13 dargestellt, zwischen der rechten Zylinderinnenwand 11a und der Aussenfläche 4a des zweiten Dichtrings 4 ein Spalt S₁ entsteht. Gegengleich wird, wie in Figur 8 beschrieben, der erste Dichtring 2 durch den Ringträger 3 an die rechte Zylinderinnenwand 11a gedrückt, sodass zwischen der linken, in Figur 13 nicht dargestellten Zylinderinnenwand 11a und dem ersten Dichtring 2 ein nicht dargestellter Spalt S₁ entsteht.

Vor dem Einführen der erfindungsgemässen Kolbenringanordnung 1 in den Innenraum des Zylinders 11 muss der Ringträger 3 elastisch verformt werden, damit die Kolbenringanordnung im Innenraum des Zylinders 11 Platz findet. Die Kolbenringanordnung 1 ist nach dem Einführen in den Innenraum des Zylinders 11, wie in den Figuren 8 und 13 dargestellt, zwischen der Innenwand 11a des Zylinders 11 eingespannt. Während einem drucklosen Zustand des Kolbenkompressors, das heisst bei einem Stillstand des Kompressors beziehungsweise bei einem Ruhezustand des Kolbens 10, werden der erste Dichtring 2 und der zweite Dichtring 4, wie in Figur 8 dargestellt, gegengleich mit einer Kraft F_{R3} bzw. F_{R4} an die Zylinderinnenwand 11a gedrückt. Durch die Ausgestaltung des Ringträgers 3 sowie durch dessen elastische Verformung innerhalb des Zylinders 11 ist sichergestellt, dass der erste Dichtring 2 und der zweite Dichtring 4 im Ruhezustand an die Zylinderinnenwand 11a gedrückt werden. Somit nehmen der erste Dichtring 2 und der zweite Dichtring 4 im Ruhezustand eine Ausgangsstellung ein, welche für den nachfolgenden Kompressionsvorgang von Bedeutung ist. Wird der in Figur 8 dargestellte Kolben 10 nach oben bewegt, beziehungsweise wird der Verdichtungsraum 14 durch die Bewegung des Kolbens 10 verkleinert und der Inhalt des Verdichtungsraums 14 verdichtet, so hat dies einen Druckanstieg des sich im Verdichtungsraum 14 befindlichen Fluids zur Folge. Dieser Druckanstieg hat zur Folge, dass der erste Dichtring 2 und der zweite Dichtring 4 mit noch grösserer Kraft F_{R3} bzw. F_{R4} an die Zylinderinnenwand 11a gedrückt werden, sodass auch, wenn das zu komprimierende Fluid einen höheren Druck aufweist, eine genügend grosse Anpresskraft der Dichtringe 2,4 an die Zylinderinnenwand 11a gewährleistet ist.

Die erfindungsgemässe Kolbenringanordnung 1 umfasst einen ersten Dichtring 2 und einen zweiten endlosen Dichtring 4, wobei beide Dichtringe 2,4 ringförmig und endlos ausgestaltet sind, das heisst in Umfangsrichtung um 360° verlaufen und keinen Spalt aufweisen. Dies ringförmige Ausgestaltung weist den Vorteil auf, dass der erste und der zweite Dichtring 2, 4 besonders stabil ausgestaltet werden kann, wobei die Festigkeit der Dichtringe 2,4 zudem durch eine dem einwirkenden Druck angepasste Materialwahl erhöht werden kann, dass ein Kaltfliessen der Dichtringe 2,4 vermieden werden kann. Die erfindungsgemässe Kolbenringanordnung 1 ist daher insbesondere auch zum Komprimieren eines Fluids auf einen sehr hohen Enddruck von beispielsweise bis zu 500 Bar geeignet sind, insbesondere zum Komprimieren von Wasserstoff. Ein solcher Dichtring besteht aus einem verschleissbaren Material, insbesondere aus einem Metall wie Bronze, Grauguss oder Sintereisen, oder aus einem Kunststoff wie PTFE, gefülltes PTFE oder Hochtemperaturpolymere wie PEEK, PI oder Epoxid.

Der Ringträge 3 kann, muss jedoch nicht aus einem verschleissbaren Material bestehen. Der Ringträger 3 besteht vorzugsweise aus einem Metall, insbesondere aus Stahl, Edelstahl, Bronze oder Grauguss, oder aus einem Kunststoff, insbesondere aus PTFE, gefülltes PTFE oder Hochtemperaturpolymere wie PEEK, PI oder Epoxid.

Figur 14 zeigt eine Seitenansicht eines sich in Richtung der Längsachse L erstreckenden Kolbens 10, wobei der nicht dargestellte Zylinder 11 und der Kolben 10 den Verdichtungsraum 14 begrenzen. Der Kolben 10 weist, ausgehend vom Verdichtungsraum 14, in Richtung der Längsachse L einen erste Teilabschnitt A1 und nachfolgend einen zweiten Teilabschnitt A2 auf, wobei entlang des ersten Teilabschnitts A1 zumindest eine Kolbenringanordnung 1 angeordnet ist, im dargestellten Ausführungsbeispiel sind es vier in Richtung der Längsachse L gegenseitig beabstandete Kolbenringanordnungen 1, und wobei entlang des zweiten Teilabschnitts A2 zumindest ein einen statischen Druck abdichtender Kolbenring 13 angeordnet ist, wobei im dargestellten Ausführungsbeispiel vier in Richtung der Längsachse L gegenseitig beabstandete Kolbenringe 13 angeordnet sind. Zudem ist am Kolben 10 noch ein Führungsring 15 angeordnet. Solche einen statischen Druck abdichtende Kolbenringe 13 sind beispielsweise in den Dokumenten EP1275888A1 oder WO2018/108464A1 offenbart. Vorzugsweise baut die zumindest eine Kolbenringanordnung 1 zumindest einen dynamischen Druckanteil ab. Vorzugsweise wird der im Verdichtungsraum 14 anliegende Druck in Längsrichtung L entlang des Kolbens 10 auf zwei unterschiedliche Weisen abgebaut, indem in Richtung der Längsachse L, ausgehend vom Verdichtungsraum 14, entlang des ersten Teilabschnittes A1 des Kolbens 10 dynamische Druckanteile abgebaut werden, und indem im nachfolgenden, zweiten Teilabschnitt A2 statische Druckanteile abgebaut werden.

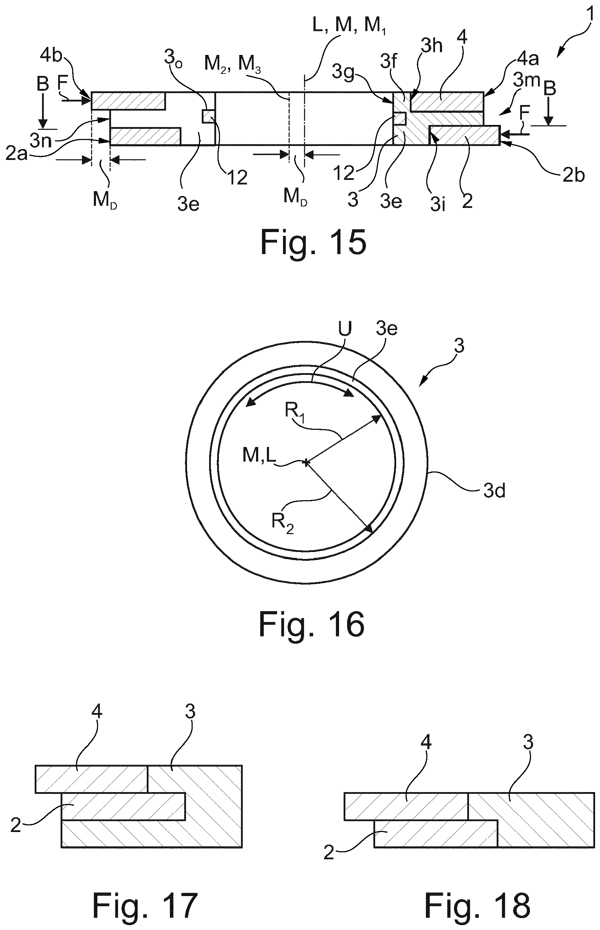

Figur 15 zeigt ein weiteres Ausführungsbeispiel einer Kolbenringanordnung 1. Im Unterschied zum Ausführungsbeispiel gemäss Figur 7 weist der Ringträger 3 im Ausführungsbeispiel gemäss Figur 15 einen geringeren Aussendurchmesser auf, sodass die Aussenfläche 3m zur Längsachse L hin verschoben ist. Diese Ausführungsform weist den Vorteil auf, dass sichergestellt ist, dass ausschliesslich der ersten Dichtring 2 und der zweiten Dichtring 4 mit der Zylinderinnenwand 11a in Berührung kommen können, bzw. dass die von der Zylinderinnenwand 11a bewirkte Reaktionskraft F ausschliesslich über den ersten Dichtring 2 und den zweiten Dichtring 4 in die Kolbenringanordnung 1 eingeleitet werden.

Wie in Figur 15 angedeutet, kann es sich als vorteilhaft erweisen die Kolbenringanordnung 1 mit einer Feder 12 zu versehen, welche eine bezüglich der Längsachse L radial nach Aussen wirkende Kraft auf den Ringträger 3 ausübt. Das in Figur 15 dargestellte Ausführungsbeispiel zeigt eine Feder 12, welche in Umfangsrichtung U verläuft, und welche vorzugsweise in einer in Umfangsrichtung U umlaufenden Nut 3o angeordnet ist, welche in der konkaven Innenfläche 3g des Ringträgers3 eingelassen ist. Die Feder 12 kann sich entlang eines Teilumfangs oder entlang des gesamten Umfangs der Innenfläche 3g erstrecken.

Figur 16 zeigt in einer Draufsicht ein weiteres Ausführungsbeispiel eines Ringträgers 3, welcher endlos bzw. einteilig ausgestaltet ist, und insbesondere ringförmig ausgestaltet ist, und deshalb, im Unterschied zu der in Figur 2 dargestellten Ausführungsform, keine Stossstelle bzw. keinen Spalt S aufweist. Durch eine geeignete Wahl eines elastischen Materials ist es möglich dem Ringträge 3 derartige elastische Eigenschaften zu verleihen, dass beim Ringträger 3 auf eine Stossstelle S verzichtet werden kann.

Die Figuren 17 und 18 zeigen je eine Detailansicht eines Schnittes durch ein weiteres Ausführungsbeispiel einer Kolbenringanordnung 1, wobei der erste Dichtring 2 und der zweite Dichtring 4 in Verlaufsrichtung der Längsachse L unmittelbar nacheinander folgend angeordnet sind und im Ringträger 3 angeordnet sind. Vorzugsweise berühren sich der erste und der zweite Dichtring 2,4 in Verlaufsrichtung der Längsachse L gegenseitig.

Der erste und/oder der zweite Dichtring 2,4 der Klobenringanordnung 1 weisen in zur Längsachse L radialen Richtung vorzugsweise entlang des gesamten Umfangs dieselbe Breite auf. In einer weiteren möglichen Ausgestaltung könnte die Breite in Umfangsrichtung jedoch auch variieren.

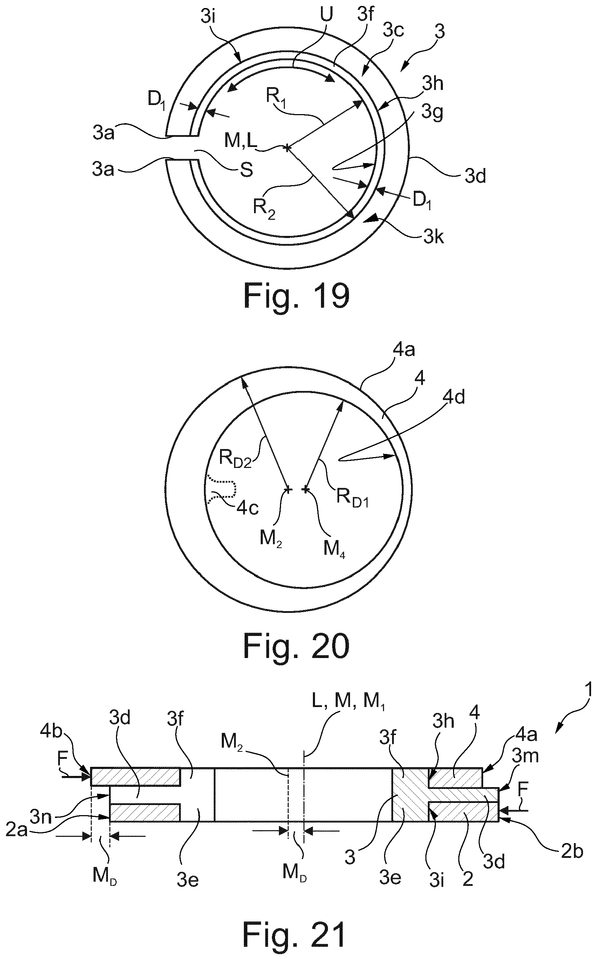

Figur 19 zeige eine Unteransicht einer weiteren Ausführungsform eines Ringträgers 3, dessen Oberseite wie in Figur 2 dargestellt ausgestaltet ist. Die Ober- und die Unterseite eines solchen Ringträgers 3 sind somit identisch ausgestaltet. Figur 20 zeigt eine Draufsicht auf ein weiteres Ausführungsbeispiels eines zweiten Dichtrings 4. Im Unterschied zum zweiten Dichtring 4 gemäss Figur 3, bei welchem die Innenumfangsfläche 4d und die Aussenumfangsfläche 4a denselben zweiten Mittelpunkt M₂ aufweisen, ist im Ausführungsbeispiel gemäss Figur 20 die Innenumfangsfläche 4d beziehungsweise deren vierter Mittelpunkt M₄ bezüglich der Aussenumfangsfläche 4a beziehungsweise deren zweitem Mittelpunkt M₂ verschoben. Die Innenumfangsfläche 4d verläuft somit exzentrisch bezüglich der Aussenumfangsfläche 4a. Figur 21 einen Längsschnitt durch eine Kolbenringanordnung 1 im entspannten Zustand, wobei die beiden Seiten des Ringträgers 3 identisch ausgestaltet sind, wie in den Figuren 19 und 2 dargestellt, und wobei der erste Dichtring 2 wie in Figur 3 dargestellt ausgestaltet ist, und wobei der zweite Dichtring 4 wie in Figur 20 dargestellt ausgestaltet ist. Der Ringträger 3 weist einen Ringträgermittelpunkt M auf und eine Längsachse L. Der erste Mittelpunkt M₁ des ersten Dichtrings 2 befindet sich in Richtung der Längsachse L in der identischen Position wie der Ringträgermittelpunkt M, wogegen der zweite Mittelpunkt M₂ des zweiten Dichtrings 4 in der dargestellten Ansicht um die Mittelpunktdistanz M_{d} nach links verschoben ist. Der technische Effekt, dass der erster und zweiter Mittelpunkt M1, M2 des ersten und zweiten Dichtrings 2,4 radial zur Längsachse L gegenseitig beabstandet angeordnet sind, kann somit, wie in Figur 7 dargestellt, dadurch erzielt werden, dass die erste und die zweite Ausnehmung 3b, 3c beziehungsweise deren konvexen Aussenflächen 3h, 3i radial zur Längsachse L verschoben sind, und/oder dass der erste und/oder zweite Dichtring 2,4, wie in Figur 20 dargestellt, je eine radial zur Längsachse L verschobenen Innenumfangsfläche 4a und Aussenumfangsfläche 4a aufweist. Die Figuren 7 und 21 zeigen zwei Ausführungsbeispiele von Kolbenringanordnungen 1, deren Aussenumfangsflächen 2a, 4a identisch verlaufen, und die radial zur Längsachse L die identische Mittelpunktdistanz M_{d} aufweisen. Die in Figur 21 dargestellte Kolbenringanordnungen 1 kann auf dieselbe Weise, wie in Figur 8 dargestellt, im Innenraum des Zylinders 11 angeordnet werden. In einer weiteren möglichen Ausgestaltung können sowohl der erste als auch der zweite Dichtring 2, 4, wie in Figur 20 dargestellt, exzentrisch ausgestaltet sein. Vorzugsweise umfasst der erste und/oder zweite Dichtring 2,4 eine Verdrehsicherung 4c, welche, wie in Figur 20 dargestellt, beispielsweise nasenförmig ausgestaltet sein kann. In einer weiteren Ausführungsform können die Innenumfangsfläche 2d, 4d des erste und/oder zweiten Dichtrings 2, 4 und die konvexe Aussenfläche 3i, 3h des Ringträgers 3 nicht wie dargestellt einen kreisförmigen Verlauf aufweisen, sondern beispielsweise einen elliptischen, einen Mehreckigen, oder einen verzahnten Verlauf aufweisen, sodass diese gegenseitige Formgebung von Ringträger 3 und erstem und/oder zweitem Richtring 2,4 eine Verdrehsicherung ausbildet.

## Patentansprüche

1. Kolbenringanordnung (1) umfassend einen ersten und einen zweiten endlosen Dichtring (2, 4) sowie einen elastischen Ringträger (3), wobei der erste und der zweite Dichtring (2,4) in einer Umfangsrichtung (U) verlaufen und je eine Aussenumfangsfläche (2a, 4a) aufweisen, wobei der erste Dichtring (2) bezüglich seiner Aussenumfangsfläche (2a) einen ersten Mittelpunkt (Mi) und der zweite Dichtring (4) bezüglich seiner Aussenumfangsfläche (4a) einen zweiten Mittelpunkt (M₂) aufweist, wobei der erste und der zweite Dichtring (2,4) je eine senkrecht zur Umfangsrichtung (U) verlaufende Längsachse (L) aufweist, wobei der Ringträger (3) in Umfangsrichtung (U) verläuft, und wobei der Ringträger (3) sowie der erste und der zweite Dichtring (1,2) derart gegenseitig angepasst ausgestaltet sind, dass der erste und der zweite Dichtring (1,2) in Richtung der Längsachse (L) nacheinander im Ringträger (3) angeordnet sind, und dass deren erster und zweiter Mittelpunkt (M₁, M₂) radial zur Längsachse (L) gegenseitig beabstandet angeordnet sind.

2. Kolbenringanordnung nach Anspruch 1, **dadurch gekennzeichnet, dass** der Ringträger (3) einteilig ausgestaltet ist.

3. Kolbenringanordnung nach Anspruch 1 oder 2, **dadurch gekennzeichnet, dass** der Ringträger (3) in Umfangsrichtung (U) einem Stoss (S) mit einem Stossspiel aufweist.

4. Kolbenringanordnung nach einem der vorhergehenden Ansprüche, **dadurch gekennzeichnet, dass** der Ringträger (3) einen radial zur Längsachse (L) verlaufenden Zwischensteg (3d) aufweist, und dass der erste und der zweite Dichtring (2, 4) in Richtung der Längsachse (L) gegenseitig beabstandet am Zwischensteg (3d) anliegen.

5. Kolbenringanordnung nach einem der vorhergehenden Ansprüche, **dadurch gekennzeichnet, dass** der Ringträger (3) eine erste Ausnehmung (3b) zur Aufnahme des ersten Dichtrings (2) und eine zweite Ausnehmung (3c) zur Aufnahme des zweiten Dichtrings (4) umfasst, wobei die erste Ausnehmung (3b) und die zweite Ausnehmung (3c) sowohl in Richtung der Längsachse (L) als auch in Richtung radial zur Längsachse (L) gegenseitig versetzt angeordnet sind.

6. Kolbenringanordnung nach einem der Ansprüche 1 bis 4, **dadurch gekennzeichnet, dass** der Ringträger (3) eine erste Ausnehmung (3b) zur Aufnahme des ersten Dichtrings (2) und eine zweite Ausnehmung (3c) zur Aufnahme des zweiten Dichtrings (4) umfasst, wobei die erste Ausnehmung (3b) und die zweite Ausnehmung (3c) nur in Richtung der Längsachse (L) versetzt angeordnet sind, jedoch nicht in Richtung radial zur Längsachse (L), und dass zumindest einer der endlosen Dichtringe (2,4) eine Innenumfangsfläche (2d, 4d) aufweist, die exzentrisch zur Aussenfläche (2a, 4a) verläuft.

7. Kolbenringanordnung nach einem der vorhergehenden Ansprüche, **dadurch gekennzeichnet, dass** der erste und der zweite Mittelpunkt (Mi, M₂) radial zur Längsachse (L) einen gegenseitigen Abstand im Bereich zwischen 0,1 mm bis 10 mm aufweisen.

8. Kolbenringanordnung nach einem der vorhergehenden Ansprüche, **dadurch gekennzeichnet, dass** diese eine in Umfangsrichtung (U) verlaufende Feder (12) umfasst, welche eine bezüglich der Längsachse (L) nach aussen wirkende Kraft auf den Ringträger (3) ausübt.

9. Kolbenringanordnung nach einem der vorhergehenden Ansprüche, **dadurch gekennzeichnet, dass** die Dichtringe (2,4) aus einem verschleissbaren Material bestehen, insbesondere aus einem Metall wie Bronze, Grauguss oder Sintereisen, oder aus einem Kunststoff wie PTFE, gefülltes PTFE oder Hochtemperaturpolymere wie PEEK, PI oder Epoxid, und/oder dass der Ringträger (3) aus einem Metall bestehen, insbesondere aus Stahl, Edelstahl, Bronze oder Grauguss, oder aus einem Kunststoff besteht, insbesondere aus PTFE, gefülltes PTFE oder Hochtemperaturpolymere wie PEEK, PI oder Epoxid .

10. Kolbenringanordnung nach einem der vorhergehenden Ansprüche, **dadurch gekennzeichnet, dass** der erste und/oder der zweite Dichtring (2,4) in Richtung der Längsachse (L) über den Ringträger (3) vorsteht.

11. Kolbenringanordnung nach einem der vorhergehenden Ansprüche mit Ausnahme von Anspruch 4, **dadurch gekennzeichnet, dass** der erste und zweite Dichtring (2,4) in Verlaufsrichtung der Längsachse (L) unmittelbar nacheinander folgend angeordnet sind.

12. Kolbenverdichter umfassend einen Zylinder (11), umfassend einen im Zylinder (11) angeordneten Kolben (10), sowie umfassend zumindest eine am Kolben (10) angeordnete Kolbenringanordnung (1) nach einem der vorhergehenden Ansprüche.

13. Kolbenverdichter nach Anspruch 12, **dadurch gekennzeichnet, dass** der erste und der zweite Dichtring (2,4) im Neuzustand einen Aussenradius (R_{D2}) aufweisen, welcher zumindest 0,1% kleiner ist als der Innenradius des Zylinders (11), und vorzugsweise zumindest 3% kleiner ist.

14. Kolbenverdichter nach Anspruch 12 oder 13, **dadurch gekennzeichnet, dass** der Zylinder (11) und der Kolben (10) einen Verdichtungsraum (14) begrenzen, dass der Kolben (10), ausgehend vom Verdichtungsraum (14), in Richtung der Längsachse (L) einen erste Teilabschnitt (A1) und nachfolgend einen zweiten Teilabschnitt (A2) aufweist, dass entlang des ersten Teilabschnitts (A1) zumindest eine Kolbenringanordnung (1) angeordnet ist, und dass entlang des zweiten Teilabschnitts (A2) zumindest ein einen statischen Druck abdichtender Kolbenring (13) angeordnet ist.

15. Verfahren zum Abdichten eines Verdichtungsraums (14), der von einem Zylinder (11) und einem darin angeordneten, in Richtung einer Längsachse (L) beweglichen Kolben (10) begrenzt wird, wobei ein erster und ein zweiter endloser Dichtring (2,4) am Kolben (10) angeordnet sind, wobei der erste und der zweite endlose Dichtring (2,4) in einem Ruhezustand Quer zur Längsachse (L) in entgegengesetzter Richtung an eine Innenwand (11a) des Zylinders (11) gedrückt werden, und indem der erste und der zweite endlose Dichtring (2,4) während der Kompressionsphase des Kolbens (10) durch den im Verdichtungsraum (14) des Zylinders (11) ansteigenden Innendruck zusätzlich in der entgegengesetzten Richtung an die Innenwand (11a) des Zylinders (11) gedrückt werden.

16. Verfahren nach Anspruch 15, **dadurch gekennzeichnet, dass** der Druck entlang des Kolben (10) auf zwei unterschiedliche Weisen abgebaut wird, indem in Richtung der Längsachse (L), ausgehend vom Verdichtungsraum (14), entlang eines ersten Teilabschnittes (A1) des Kolbens (10) dynamische Druckanteile abgebaut werden, und indem in einem nachfolgenden, zweiten Teilabschnitt (A2) statische Druckanteile abgebaut werden.

17. Verwendung eines Kolbenringanordnung nach einem der Ansprüche 1 bis 11 als Druckbrecher zum Abdichten dynamischer Druckanteile.
